# EUROPEAN PATENT SPECIFICATION

(11) **EP 2 037 219 B1**
(45) Date of publication and mention of the grant of the patent: **28.12.2011**
(21) Application number: 07017723.3
(22) Date of filing: 11.09.2007
(51) Int. Cl.: G01C 21/34

(54) **Method of providing a route in a vehicle navigation system and vehicle navigation system**
Routensuchverfahren und Fahrzeugnavigationssystem
Procédé de recherche d'itinéraire et système de navigation de véhicule

(43) Date of publication of application: 18.03.2009
(73) Proprietor: Harman Becker Automotive Systems GmbH, 76307 Karlsbad (DE)
(72) Inventor: Kropp, Michaela, 71157 Hildrizhausen (DE)
(74) Representative: Bertsch, Florian Oliver

(56) References cited:
- EP-A- 1 630 524
- US-A1- 2006 129 313
- US-B2- 6 615 133
- US-B2- 6 873 908

## Description

### Field of the Invention

The invention relates to a method of providing a route in a vehicle navigation system and to a vehicle navigation system. In particular, it relates to a method of providing a user of a vehicle navigation system with a safe route in particular situations.

### Background of the Invention

Modern vehicles are often equipped with vehicle navigation systems. In these systems, the position of a vehicle is determined by using e.g. a GPS system, and a map of the area surrounding the determined position is displayed to a user. This allows the user to orientate and to navigate even in regions which are not known to him. One particular feature of these systems is to allow the user to enter a destination, for which the system then calculates a route along which the user can reach the destination. Since in general more than one route exists between a starting position and a destination, the system generally chooses either the shortest route or the fastest route. The latest systems may even use traffic-related information in route calculation, so that for example traffic jams are avoided. Yet these conventional vehicle navigation system are not formed so as to provide a safe route for the driver of the vehicle. The criteria used in conventional vehicle navigation systems for route calculation are related to time/velocity or distance. These systems do not take into account whether a route is safe under certain conditions or whether a road is suitable to be travelled on under certain conditions. Yet this is of great importance in conditions such as heavy snowfall, rain or flooding.

### Prior Art

The German Patent DE 102 61 816 B4 discloses a navigation system and a method for searching a route. A route is searched taking into account visitor information on locations that may be interesting for a visitor to see. The route is searched on the basis of map information comprising visitor information, and it is chosen in such a way that the route closely passes by the visitor locations. Yet the system does not provide a route that is safe to travel on under certain conditions.

The US patent 6,615,133 B2 discloses a vehicle navigation system that uses historical data for obtaining an optimum route between a starting location and an ending location. Historical data regarding legs of a travel path is stored in a database of a historical data supplier and provided to a vehicle routing server, where it is used to compare various possible routes in order to determine an optimum route according to selection criteria.

The European patent application EP 1 630 524 A1 describes a navigation device which determines a route to a destination based on calendar information.

The US patent 6,873,908 B2 discloses a navigation system comprising a traffic information database enabling the driver to store observations made during his trip as traffic information, the system using this traffic information for updated route planning.

The US patent application publication 2006/0129313 A1 relates to a route providing system that receives one or more conditions and criteria associated with map directions over a computer network from a service bureau and that helps and rewards drivers for traversing optimal driving routes.

Thus, there is a need to provide a driver of a vehicle with route information for guidance, so that the driver can navigate along a route that is safe and suitable for presently prevailing conditions.

### Summary of the Invention

This need is met by the features of the independent claims. The dependent claims describe preferred embodiments of the invention.

The method according to the invention provides a route in a vehicle navigation system, comprising the steps of providing a starting point and a destination, providing map data comprising road sections associated with numerical values relating to the trafficability of the road sections, obtaining situation information, calculating a route from the starting point to the destination based on the map data comprising the road sections,
wherein the situation information determines the consideration of the numerical values associated with the road sections for the route calculation.

The numerical values relate to the trafficability of the road sections in winter and comprise numerical values relating to one or a combination of the following road section properties: incline, curvature, size.

The numerical values that are taken into account may be such values as weighting factors, cost factors, cost functions and the like. A road section may be a section connecting two points on a map, said points being generally defined by geographic coordinates, yet a road section may be also a more complex structure of multiple points with multiple connections. As road sections may comprise points, the numerical values may also be assigned to points. For example, geographic positions (e.g. longitude and latitude) may be assigned to two points, wherein the distance between the two points may be assigned to a road section connecting the two points. Numerical values used in conventional systems may be the distance between two points or the time required to travel between two points. The points may also be referred to as nodes, and road sections as links connecting two nodes.

The situation information determines the consideration of the numerical values. It may determine which numerical values are taken into account, and/or how important these values are for the calculation of the route. This may for example be achieved by weighting the numerical values with weighting factors. Situation information may relate to weather conditions or information about other situations, such as calendar information, and the like. Preferably, situation information is information about external circumstances, for example circumstances that influence the trafficability of particular road sections. It is an advantage to determine the consideration of properties of a road section for route calculation, said properties relating to the trafficability of the road section based on situation information, as in some situations a particular property may be of importance, whereas it is not important in another situation. For example, in heavy winter weather, an incline of a road section is of importance, whereas during flooding, the altitude of a road section is of importance. By obtaining situation information and using said situation information to determine the use of particular road section properties in route calculation, a safe and suitable route can be obtained for a range of situations.

Preferably, the numerical values further relate to the trafficability of road sections in one or a combination of the following situations: rainfall, flooding. It is an advantage to take numerical values relating to the trafficability in these situations into account, as these situations are rather often responsible for preventing the traveling on particular road sections, and for the occurrence of accidents and other emergency situations.

According to the invention, numerical values are considered that relate to the trafficability of the road sections in winter. That way, when traveling in winter, the vehicle navigation system can provide a route that is preferable over other routes, which may be suitable for traveling in summer. For example in a situation where there is snow cover on the roads, a conventional system may choose a short road traversing a hill with a steep incline, whereas the navigation system of the present invention may avoid such a road, since it may take into account that a road with such a steep incline may not be trafficable during winter.

The vehicle navigation system may take a plurality of numerical values into account, and a user may select the importance of these numerical values, or which numerical values the system should take into account. The navigation system may be a fixed navigation system built into the center console or dashboard of the vehicle, yet it also may be a portable navigation system that can also be used for hand-held operation. Such a system may be temporarily mounted inside a vehicle and provide a driver of a vehicle with a route.

According to the invention, the numerical values relating to the trafficability of the road sections in winter comprise numerical values relating to one or a combination of the following road section properties: incline, curvature, size. They may further comprise numerical values relating to width, or tarmac. The incline of a road section is a rather important property in winter. Particularly with ice or snow cover, the incline of a road section determines whether a vehicle can travel on the road section or not. Steep road sections will be very hard to climb for a vehicle in winter, whereas driving down a steep road section may be very dangerous, since it may be almost impossible to slow down the vehicle when a snow cover or ice cover is present, which may result in a damage to the vehicle or in an injury of persons. Similarly, the curvature of a road section has an effect on its trafficability during winter. A road section with a particular curve radius may be traveled on at a particular speed in summer, whereas with the same speed in winter the vehicle may be sliding off the road. In instances where the road surface is very slippery, it may be very hard for a driver to steer the vehicle on a road section with a small curve radius. If the vehicle is driven off the road, damage and injury may result. Road size may also determine the trafficability of a road section in winter. Size may refer to the number of lanes the road section has, or the general class of the road section, such as highway, freeway, city road, country road, one-way street, or the like. For example on a road with only one lane, it will be very difficult for two vehicles to pass each other if the road is slippery, which is often the case in winter. Trying to avoid oncoming traffic may be very difficult in such a situation and may result in the road being blocked. Similar difficulties may occur when large snow accumulations are present on both sides of the road, e.g. after the road was cleared by a snow plough. Also, the actual width of a road section is of importance. A highway with four lanes may for example have an extra lane on each side, which is generally used for broken down vehicles. Such a lane can provide additional safety when driving in winter on a slippery road, as it may be used for avoiding other vehicles in cases where the braking distance is substantially increased due to the road conditions. The type of tarmac used on a road can also effect the trafficability of a road section in winter. The type of tarmac may effect the overfreezing behavior of a road section, and some types of tarmac have more grip than others. A numerical value may be assigned to the above-described road section properties, said numerical value can then be taken into account when determining a route. A combination of numerical values may be taken into account, e.g. by weighting the numerical values with weighting factors, e.g. determined by system presets, user entry, weather conditions or the like. Taking one or a combination of the above-described road section properties into account when determining the route has the advantage that the route determined by the navigation system will be much more suitable to be traveled on in winter than a route determined by a conventional navigation system.

According to another embodiment of the invention, numerical values are considered that relate to the trafficability of road sections during rainfall and/or flooding. Preferably, the numerical values relating to the trafficability of road sections during rainfall or flooding comprise numerical values relating to one or a combination of the following road section properties: known flood area, altitude, proximity to sea, proximity to lake, proximity to river, drainage. Some areas are known to be regularly flooded, e.g. roads close to seas, where strong tides often occur. Known flood areas may for example be avoided when the situation information determines that a high tide is expected. Similarly, altitude of a road section is of importance. In the case of flooding, road sections that lie below a certain flood level are generally set under water. Such a road section may for example be an underpass, a tunnel, a road section lying below the sea level or road sections lying below or slightly above a level of a river or a lake. Also, a road section that is at a lower altitude compared to surrounding road sections may accumulate a lot of water during heavy rainfall, and may thus get flooded. Furthermore, the proximity to the sea, proximity to a lake or to a river may be considered. They are preferably considered in combination with the altitude of these road sections. Road sections closer to the sea, to a lake or a river get more easily flooded if the sea level or the level in the lake or river rises, and it is thus an advantage to consider these properties. Particularly in heavy rains, the drainage of a road section is of importance. Water may drain well from some road sections, whereas other road sections, such as low lying road sections or road sections in less developed environments often accumulate water, leading to flooding. Accordingly, it is an advantage to consider the above-mentioned road section properties for a route calculation in a particular situation, such as for heavy rainfall or flooding.

The situation information preferably comprises one or a combination of the following: weather conditions, calendar information, tide information, snow coverage, flood information. Weather conditions may comprise snowfall, rain, temperature and the like. They may also relate to overfreezing or the presence of black ice on roads. Calendar information may relate to the season, such as winter, or to a particular day and time, such as the time of a particularly high tide, or a period of time, such as a period of time when a particular road section is flooded.

Based on calendar information, the vehicle navigation system may determine that it is presently winter, and it may thus use a "winter mode" to calculate a route, which means that the vehicle navigation system takes numerical values relating to the trafficability of road sections in winter into account. Similarly, a weather sensor on the vehicle may provide the vehicle navigation system with the information that winter conditions are presently prevailing. As a result, the vehicle navigation system may determine a route using a "winter mode".

Taking tide information into account is particularly useful in regions close to a sea, such as the Atlantic or the Pacific Ocean, or the North Sea. At some times of the year, particularly high tides can be expected, which may flood a large number of road sections. As tide information is readily available, it is an advantage to take this into account in such areas. In some situations, weather conditions are good, even though snow cover is still prevailing. Thus, even in good weather conditions, road sections may not be trafficable due to snow cover. Taking snow coverage into account is thus an advantage. Furthermore, several areas are regularly flooded, e.g. due to heavy rainfall, snow melting and the like. Using flood information, such flooded areas may be avoided by the route calculated by the navigation system.

In another embodiment, the determination of a route is performed so that road sections with a higher incline and/or a smaller size and/or a smaller curve radius are avoided. Generally, several different routes lead from a starting point to a destination, and these routes may comprise different road sections with different inclines, different curve radii or different sizes. When the navigation system determines the route, it preferably selects a route which comprises road sections with low inclines compared to the road sections of the other routes. This is advantageous since it may be difficult in winter or during heavy rain to climb road sections with high inclines. Preferably, the vehicle navigation system also chooses a route comprising road sections that are larger than the road sections of other possible routes. Driving on larger size roads in winter is advantageous, since it is safer, provides more space for emergency braking, and larger size roads are also more often cleared of snow than smaller roads. The vehicle navigation system furthermore preferentially selects a route with road sections, of which the curve radii are larger than the curve radii of road sections of alternative routes. In snowy or icy conditions, a vehicle may easily come off the road in curves with small radii, it is thus advantageous to provide a route with large curve radii. Preferentially, incline, size and curve radius are considered when determining the route. If two possible routes exist from a starting point to a destination, the vehicle navigation system may choose the route with the overall better trafficability in winter. The route may then be determined based on numerical values assigned to the road section properties. For example, if the numerical values are in the form of cost factors, the route may be determined which has the lowest overall cost factor. Different weightings may be assigned to the numerical values of the different road section properties, according to their importance or according to driver preferences. In the present embodiment, the system selects a route that avoids high inclines, small sizes and small curve radii, which is particularly advantageous in winter.

In another embodiment of the invention, weather conditions are taken into account when determining the route. Situation information relating to weather conditions may be obtained before the route is determined and/or during navigation along the route in order to adjust the route based on the obtained situation information on weather conditions. The information on weather conditions may for example be obtained from a weather sensor mounted to the vehicle, from information transmitted by radio or any other wireless connection, or by the driver entering the information into the system. Weather information is provided by companies such as Meteo Time GmbH or WIS WeatherInfoService GmbH via radio wave transmissions. The vehicle navigation system may have the information stored which routes to avoid during which types of weather conditions. The system may for example first determine a route based on dry and sunny weather conditions. When traveling along the route, weather conditions change to snow, as a result of which the system determines a new route taking into account the weather condition. The new route may for example then avoid small curve radii or high inclines. In another example, the vehicle may be driving along a dry route during the day, yet along the route, as night falls, the temperature drops and road sections may overfreeze. Such a change in temperature may then be detected by a temperature sensor mounted to the vehicle, and based on that information the vehicle navigation system may provide a new route taking into account numerical values relating to the trafficability of road sections in winter. If heavy rainfall is detected, road sections comprising underpasses or low lying road sections may be avoided. Weather conditions that may be considered comprise ground temperature, air temperature, rain, snow fall, snow cover, ice cover and the like. When snow or ice cover is present, it may for example be particularly important to avoid road sections with a high incline or small curve radius, since driving on these road sections may be very dangerous and they may be very hard to pass. By taking into account weather conditions, a safe route suitable for presently prevailing conditions is thus provided.

According to another embodiment, the numerical values relating to the trafficability of the road sections in winter comprise numerical values relating to one or a combination of the following local conditions: roadside vegetation, probability of black ice formation, hillside situation, road crests, road dips, road closures, mountain passes, altitude. The numerical values relating to these local conditions may be used by themselves or may be used in combination with the numerical values relating to road section properties. These local conditions may affect the trafficability of a road section in winter.

Roadside vegetation often has an influence on the local temperature, and thus it may determine the trafficability of the road section. For example snow cover may longer prevail inside a shadowy forest than on free sunny road sections. Road sections without roadside vegetation such as in open country or on bridges, may be exposed to a strong wind and may easily overfreeze as a result. Different road sections may have a different probability of black ice formation. Road sections in very humid areas such as along a river may easily overfreeze, whereas other road sections that are often exposed to sun may hardly ever overfreeze. Similarly, the hillside situation may influence the trafficability of a road section. In the northern hemisphere road sections on the north side of a hill or mountain often do not receive much sun resulting in longer snow cover and faster overfreezing. In contrast, road sections on the southern side of a hill or mountain are often free of ice and snow. Road sections may sometimes comprise road crests. Although the overall incline of a road section may be rather low, a road crest in the road section may lead to a local substantial increase in incline. When covered in snow or ice, such a crest may be very hard to pass for a vehicle. This also holds true for road dips. When snow or ice cover prevails, it may be very difficult for a vehicle to get out of a road dip. Furthermore, water may collect on the bottom of a road dip and may freeze during low temperatures. As a result, it may be particularly slippery on the bottom of a road dip. Furthermore, road closures may occur during winter or in winter weather conditions. These may occur due to accidents or for example on mountain passes, which may be unpassable during winter weather conditions. Information on road closures may for example be obtained via a traffic message channel received by a radio receiver. Even if mountain passes are not closed, they may be very hard to travel on in winter weather conditions, and may thus be avoided when determining a route. In general, altitude will affect the trafficability of road sections. Snow line as well as temperature depend on altitude. As a result, in similar weather conditions a road section may be well trafficable at lower altitude, whereas it it would be very hard to travel on a similar section at a higher altitude. Altitude is thus a local condition which may influence the trafficability of a road section in winter. The above-mentioned local conditions may all have a large impact on the trafficability of a road section in winter. It is thus an advantage to take one or more of these local conditions into consideration when determining a route.

According to another aspect of the invention, the map data comprising road sections to which numerical values are assigned is provided on a data carrier which can be accessed by the navigation system. The map data may for example be stored on a CD or a DVD which can be inserted into a CD/DVD drive of the vehicle navigation system, it may be stored on a memory stick, a compact flash card, or similar storage device, or it may be stored on a hard disk internal to the vehicle navigation system. Alternatively, it may also be stored on a data carrier comprised in a server and wirelessly transferred to the vehicle navigation system. This would have the advantage that the map data is always up to date, as it may constantly be updated on the server. Providing the map data comprising the numerical values relating to the trafficability of road sections on a data carrier has the advantage that the user simply has to provide the vehicle navigation system with access to the data carrier in order to obtain a route that is safe and suitable for navigation at the presently prevailing conditions. The map data may for example be stored on a server which is connected to the internet and the map data may then be transferred via the internet and a wireless connection to the vehicle navigation system.

According to another aspect, the numerical values relating to the trafficability of the road sections in winter comprise numerical values that are assigned to road sections by a user of the vehicle navigation system. In map data, numerical values relating to the trafficability in winter may not be available for all road sections. A user of the vehicle navigation system may thus assign numerical values to road sections. The user may also know particular road sections which may be very hard to travel on in certain weather conditions. Accordingly, the user may enter numerical values relating to the trafficability of the road section into the vehicle navigation system. The user does not necessarily have to directly enter a numerical value into the system, he may enter a judgement into the system, such as "poor trafficability of road section during snow cover", as a result of which the system then assigns a particular numerical value to said road section. This has the advantage that when providing a route the vehicle navigation system can take into account data other than preloaded map data, making the method very flexible and versatile.

In another embodiment, weighting factors weighting the numerical values relating to the trafficability of the road sections are determined based on the situation information and are taken into account for the route determination. By using weighting factors to weight the properties of a road section, a route can be determined which considers the trafficability of the road sections on which the situation has an impact. In a situation of heavy snowfall, weighting factors for the road section properties "incline" and "curve radius" may be set to high values, whereas during heavy rainfall the weighting factors for the road section properties "proximity to a river" and "altitude" may be set to high values. Thus, in the case of heavy snowfall, routes are avoided comprising steep inclines and small curve radii, whereas during heavy rainfall low lying roads in proximity of rivers are avoided. Thus, weighting the road section properties in the form of numerical values with weighting factors, said weighting factors depending on the situation information, has the advantage that a route is provided which is suitable and save in the presently prevailing conditions.

According to an embodiment, the method further comprises the step of providing situation information by user input. The user may for example inform the vehicle navigation system of the presently prevailing conditions, such as heavy rainfall, heavy snowfall or flooding. The entered situation information then determines which numerical values relating to the trafficability of the road sections are taken into account. Preferably, the user inputs that information before a route is calculated by the system. The user may thus set a mode, e.g. called "winter mode", "rain mode", or "flood mode", in which the numerical values relating to the trafficability of the road sections in winter, during rain or flooding, respectively, are taken into account when determining a route. When this mode is switched off by a user, the vehicle navigation system may determine a route based on other criteria, such as driving distance or travel time. This has the advantage that the user can choose on the basis of which criteria the vehicle navigation system determines a route.

In another embodiment of the invention, the method comprises the further step of automatically obtaining situation information. For example weather conditions or calendar information may be automatically obtained. Systems that automatically provide calendar and tide information are known in the art and may be integrated into the vehicle navigation system. Flood information and information on snow coverage may be obtained from a radio source, such as a radio weather channel. Information on weather conditions may, as previously mentioned, be supplied by information sources, such as a radio source similar to a traffic message channel, or an internet source, or by a server. It is also possible to obtain situation information both by user entry and automatically.

According to another embodiment, the method further comprises the step of warning the driver of a vehicle if the vehicle approaches a road section to which numerical values relating to the trafficability of the road section are assigned which meet a predetermined criterion. Such a predetermined criterion may for example be that one numerical value is above or below a certain threshold, or that a combination of numerical values is below or above a certain threshold. For example, if the numerical value relates to incline of a road section, a warning may be issued to the driver if the vehicle navigation system determines that the numerical value assigned to an approaching road section indicates that the road section has an incline which is above a certain threshold. A road section may for example have a curve radius and an incline which both are below their respective threshold values, yet the combination of those properties may still render the road section dangerous for driving in winter conditions. Thus, the values may be combined and compared to another threshold to determine whether the predetermined criterion is met. The predetermined criterion generally indicates whether a road section is safe or dangerous to drive on, preferably in dependence on presently prevailing weather conditions. A road section may for example be perfectly passable in summer, whereas it would be dangerous to pass the road section in winter. Accordingly, in winter weather conditions the vehicle navigation system would provide the driver with a warning. This is particularly useful, since often it cannot be avoided that a route passes along road sections which are hard to travel on in winter weather conditions. The driver may thus be alerted by the warning, and accidents will be avoided.

A vehicle navigation system according to the invention, in which a route is provided along which a driver of a vehicle can navigate from a starting point to a destination, comprises an input unit for entering the destination and/or the starting point, a data providing unit providing map data comprising road sections associated with numerical values relating to the trafficability of the road sections, an information providing unit providing situation information, and a processing unit for calculating a route from the starting point to the destination based on the map data comprising the road sections, wherein the situation information determines the consideration of the numerical values associated with the road sections for the route calculation. The numerical values relate to the trafficability of the road sections in winter and comprise numerical values relating to one or a combination of the following road section properties: incline, curvature and size. A vehicle navigation system generally also comprises a unit for determining the position of the navigation system/the vehicle, and said position may also be used as a starting point. Yet a route may also be determined from another starting point. The data providing unit may be in the form of a CD or a DVD player, reading the map data of a CD or DVD, or an internal hard drive, from which the map data is read, a wireless receiver receiving the map data wirelessly, or other data providing units such as USB ports for connecting a USB memory stick or card readers for reading map data from memory cards. The vehicle navigation system may for example use the present position of the vehicle as a starting point, the user or driver of the vehicle may enter an arrival point or destination, and the processing unit will determine a route from the starting point to the destination taking into account the trafficability of road sections in accordance with the obtained situation information, whereby preferably a route is obtained that is safe and suitable to be traveled on in the presently prevailing conditions. If a snow or ice cover exists, the processing unit may determine a route which avoids road sections with steep inclines, small curve radii and small sizes. This has the advantage that the driver of the vehicle is provided with a safe route, along which he can navigate to the destination.

According to another aspect, the vehicle navigation system further comprises control means which enable a user of the vehicle navigation system to enter situation information. The control means may be comprised in the input unit. The user of the vehicle navigation system is thus provided with a control element, with which he can select e.g. a "winter mode", in which the processing unit will determine a route on the basis of the numerical values relating to the trafficability of the road sections in winter. The user may also switch off that mode using the control means, in which case the vehicle navigation system may determine a route with the aim to minimize driving time or driving distance or may select another mode, such as "rain mode". While driving time and driving distance may also be taken into account when determining a route in winter, the numerical values relating to the trafficability of road sections in winter are generally not taken into account in other modes. This has the advantage that the driver of the vehicle may determine on which basis the vehicle navigation system selects a route, he may for example choose to be provided with a route which is safe in winter.

The vehicle navigation system may furthermore comprise a weather sensor for determining situation information in the form of weather conditions. The weather sensor may have the form of a thermometer, a rain sensor, a hygrometer, a pressure sensor, a heated rain sensor for detecting snowfall, and others, or a combination thereof. Information from the weather sensor may for example be used to automatically determine which mode is used to calculate the route, for example at sub-zero temperatures a route may be automatically calculated in "winter mode", meaning that values relating to the trafficability of road sections in winter are taken into account. The information on weather conditions may furthermore be directly used in the route calculation, for example for weighting numerical values corresponding to different road section properties or local properties when determining a route. This has the advantage that the driver is provided with a route that is suitable for the presently prevailing weather conditions.

The vehicle navigation system may furthermore be formed so as to perform any of the above-mentioned methods.

According to another aspect, a computer program product is provided that can be loaded into the internal memory of the computer, said product comprising software code portions for performing any of the above-mentioned methods when the product is executed. Such a computer program product may for example be provided on a data carrier. This has the advantage that one of the above-mentioned methods may be performed on a conventional vehicle navigation system by executing the computer program product on the system.

Furthermore, a data carrier for the use with one of the above-described vehicle navigation systems is provided, said data carrier comprising map data with road sections to which numerical values relating to the trafficability of the road sections are assigned. The data carrier may have such a form as a CD, a DVD, a memory stick, a memory card, a hard drive, or the like. The data carrier does not necessarily have to be comprised in the vehicle navigation system, it may be located at another position, such as in a server, wherein the map data is for example wirelessly transferred to the vehicle navigation system. Such a server may for example also be an internet server, wherein the map data is transferred over the internet, and may be transferred wirelessly from a connection point to the vehicle navigation system. This has the advantage that the map data the vehicle navigation system uses to determine a route can always be kept up to date.

Further advantages of the invention will become apparent from the preferred embodiments described hereinafter. The preferred embodiments are described with reference to the appended figures.

### Brief Description of the Drawings

Fig. 1 shows a schematic drawing of a vehicle navigation system.
Fig. 2 shows a flow diagram of an embodiment of the method for providing a route in a vehicle navigation system.
Fig. 3 is a schematic drawing of three possible routes from a starting point to an arrival point.
Fig. 4 shows a flow diagram of an alternate method for providing a route in a vehicle navigation system.

### Description of Preferred Embodiments

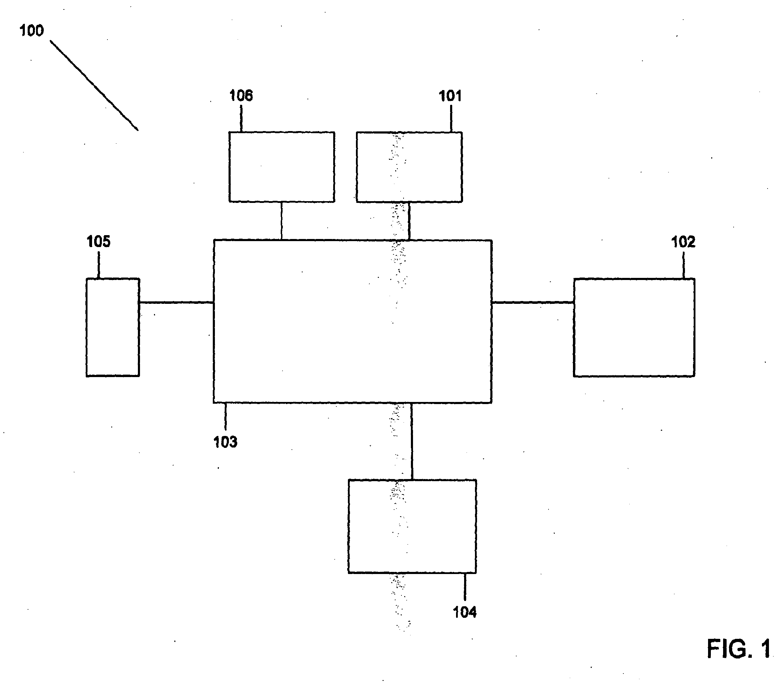

Fig. 1 shows a vehicle navigation system 100 comprising in input unit 101, a data providing unit 102 and a processing unit 103. A user can enter a starting point and a destination via the input unit 101 into the vehicle navigation system 100 either manually or by voice command. Alternatively, the current position, which may be determined by the position determination unit 104, may be taken as a starting point. The input unit 101 may be in the form of turn/push buttons, soft or hard keys, keyboard elements, a touchscreen, a microphone, or the like. The data providing unit 102 may have the form of a CD/DVD drive, a hard drive, a memory card reader, a USB connector to which a USB stick may be connected, a wireless receiver, or any other unit capable of providing map data. The processing unit 103 receives map data from the data providing unit 102 and the starting point/destination from the input unit 101 as well as situation information from the input unit 101 or the weather sensor 105, and determines a route from the starting point to the arrival point taking into account numerical values relating to the trafficability of road sections, wherein the situation information determines which numerical values are taken into account. The numerical values may be comprised in the map data provided by the data providing unit 102, or they may be individually entered by a user of the vehicle navigation system by means of input unit 101. User-entered values may be stored in a processing unit 103, yet preferably they are stored on a data carrier such as a memory stick or memory card which may be present in the data providing unit 102.

The processing unit 103 may comprise all components known from conventional vehicle navigation systems and required for determining a route from a starting point to a destination, such as a microprocessor and random access memory. Software code portions may be executed by the microprocessor of processing unit 103 in order to calculate a route from the starting point to the destinations based on the map data. An executed software program may comprise code portions for executing a search algorithm for finding a route, such as a breadth-first-search or a Dijkstra-algorithm or an A*-algorithm. It should be clear that several different search algorithms are known to a person skilled in the art, and it is not important which algorithm is used to determine a route from the starting point to the destination, as long as numerical values relating to the trafficability of road sections are taken into account. Furthermore, the processing unit takes information relating to current weather conditions into account. Such information may be entered by a user of the system by means of input unit 101, or it may be obtained from a weather sensor 105. The weather sensor 105 may comprise a temperature sensor for sensing the air temperature or ground temperature, or it may comprise a rain sensor or any other sensors suitable for determining the current weather conditions. Once the processing unit 103 has determined a route, it outputs the route to a user of the vehicle navigation system 100 by means of the output unit 106. The output unit 106 for example may comprise a display and means for audio output, such as loudspeakers. The entire route or sections of the route may be displayed to the user, and the user may use the input unit 101 to scroll between sections or zoom in and out of route sections. A driver of the vehicle may now start to navigate along the route, and directions for staying on the route may be given out to the driver by means of the display or in the form of acoustic signals. When driving, the position determination unit 104 repeatedly determines the current position of the vehicle, allowing the processing unit 103 to monitor the progress of the vehicle along the route.

In the vehicle navigation system 100 the data providing unit 102 provides map data to processing unit 103 in which road sections are associated with numerical values relating to the trafficability of the road sections, e.g. in winter. The search for a route in processing unit 103 may then be performed in such a way that a route is provided which is safe and suitable to be driven on in winter, e.g. by avoiding road sections with small curve radii, high inclines, or small size. The numerical values may be in the form of cost factors, which may be weighted by weighting coefficients determined by the situation information, and a cost function may be calculated for a number of possible routes from the starting point to the arrival point. A cost function may be calculated for a number of fastest or shortest routes, or for routes that are a certain distance longer or require a certain amount of additional travel time compared to the shortest or fastest route, respectively. A driver may for example be willing to take a route which is a certain distance longer than the shortest route, thereby avoiding road sections that may be critical to travel on in the prevailing conditions. Each possible route within the predetermined distance may now be associated with a cost function, and the processing unit may then select the route with the lowest cost function and display this route to the driver. Yet, multiple routes may be displayed to the driver with information such as required travel time, distance and route safety, and the driver may then choose via input unit 101 on which route he wants to travel. The search algorithm may also directly find the route with the lowest cost function. The route is thus determined by a minimization of a cost function.

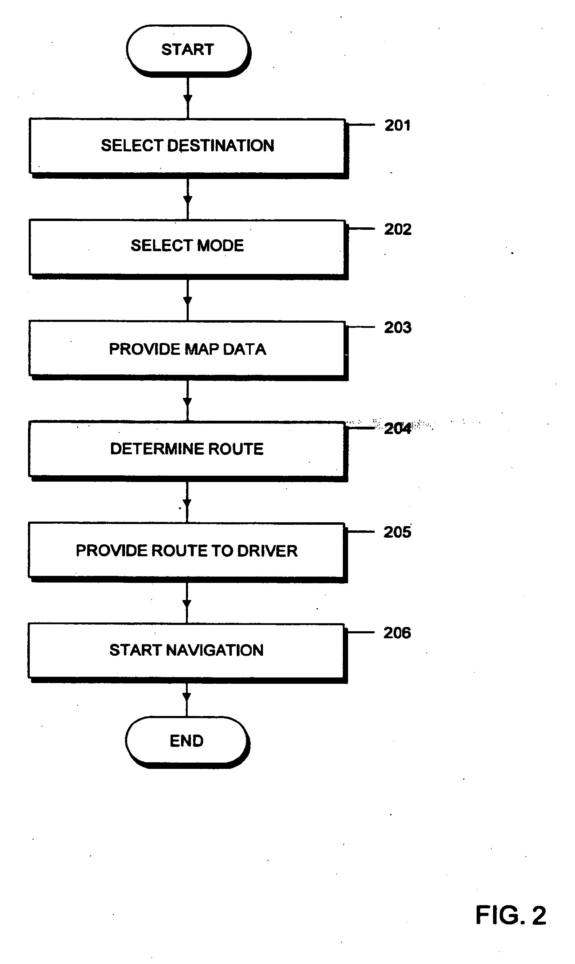

Fig. 2 shows an embodiment of a method of providing a route in a vehicle navigation system. In a first step 201, a user of a vehicle navigation system enters an arrival point or a destination. The user of the system may for example be the driver of a vehicle or a co-driver or other vehicle passenger, or it may also be any other person, as the navigation system may be detachable and the destination may thus be entered outside the vehicle. The user may also enter a starting point in the same step, for example if he uses the navigation system outside the vehicle, yet preferably the current position is used as a starting point. In a next step 202, the user enters situation information by selecting a mode. The vehicle navigation system may provide several possible modes for selection. Such modes may for example be standard modes not associated with situation information, such as shortest distance, fastest route, or economy, or they may be modes by the selection of which situation information is provided, such as rain mode, flood mode, or winter mode. The mode selected by the user will later determine the way in which a route is calculated by the vehicle navigation system. If situation information is provided, the numerical values relating to trafficability will be taken into account. The mode as well as the destination may be input by means of input unit 101. Map data is provided in a next step 203. Map data generally comprises information relating to points, areas, or roads of a certain geographical region. The elements in the map data are generally defined by location coordinates, such as longitude and latitude. The map data may for example be in the form of the geographic data format (GDF) and comprise the basic elements of nodes (e.g. intersections or points of interest), links (e.g. road sections) and areas (e.g. parks, lakes). These so-called entities comprise attributes which are properties such as a shape, an address, a road class, a speed range and the like. In a preferred embodiment, the properties of links comprise numerical values for road curvature, incline and size. They may furthermore comprise properties such as the road tarmac, roadside vegetation, probability of black ice formation, hillside situation, road crests, road dips, road closures, mountain passes, altitude, and other properties, such as the above-mentioned ones. A processing unit such as the processing unit 103 receives the map data from e.g. a data providing unit 102, and determines a route from the starting point to the destination in a next step 204. The processing unit 103 finds the route from the starting point to the destination by using a search algorithm. If the map data is provided in the form of nodes and links, i.e. road sections, the search algorithm will find a sequence of road sections that connects the starting point and the destination. During the search, the algorithm will consider attributes assigned to the link or road section. These attributes may be provided in the map in the form of numerical values. Depending on the mode that the user has chosen in step 202, the vehicle navigation system will take certain attributes into account when determining a route. In winter mode, attributes such as the curve radius of a road section, incline and road size, as well as general attributes such as section length and required travel time will be considered. A route will then be selected which minimizes a cost function based on these attributes. That way, a route is determined which avoids small curve radii, high inclines and small-sized road sections, while still keeping length and travel time at a reasonable value. The way in which the cost function is calculated, i.e. which attributes are considered, may be determined by the user or automatically by entering or obtaining situation information. Furthermore, a user may directly enter driving preferences into the navigation system. If a user fears driving on winding roads in unsafe conditions, he may enter this information into the system, and a route will be provided avoiding road sections with many curves. This may be achieved by giving the link attribute of curve radius a particularly high weight, e.g. by using a weighting factor, so that when the search algorithm searches for the route with the lowest cost function, routes with many curving sections will be avoided. This is also possible in a mobile system used e.g. by a cyclist who wants to avoid steep inclines. This can be achieved by increasing the weighting factor for the property "incline".

In the next step 205, the route determined by the processing unit is provided to the driver. If the driver is not satisfied with the route, he may choose to select a different mode and thus go back to step 202. The driver may also be provided with e.g. the five best routes, meaning the five routes with the lowest cost function, one of which he may then choose. The route is generally displayed on a display with additional audio information provided for guidance, such as directions for turning and the like. In the next step 206, navigation starts, meaning that the driver of the vehicle drives the vehicle along the route, receiving directions from the vehicle navigation system. In case the driver leaves the route, the route may be recalculated and new route information is provided to the driver. In winter mode, the numerical values relating to the trafficability of road sections in winter are taken into account when determining the route, and the vehicle is guided along a route which is safe and suitable for the prevailing conditions.

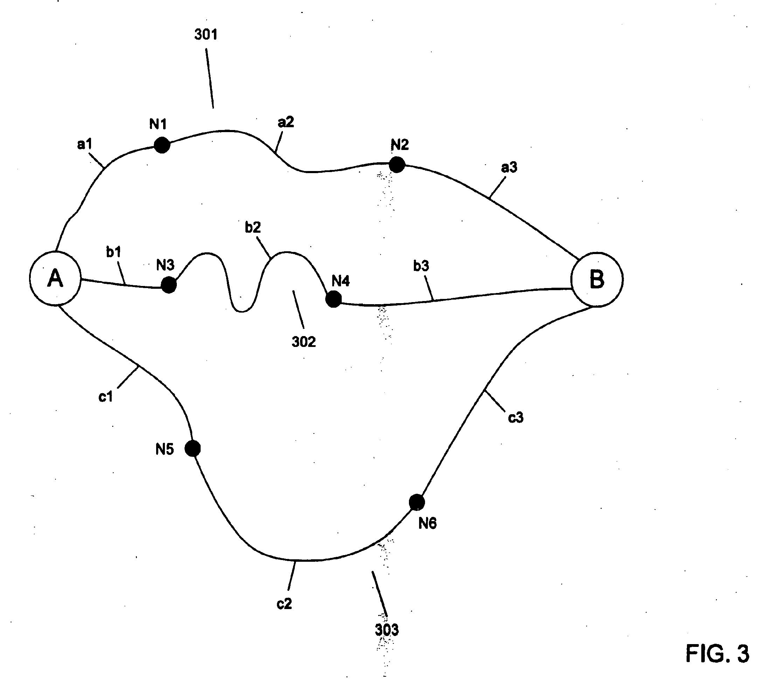

Fig. 3 is a schematic diagram of three routes connecting a starting point A with an arrival point or a destination B. The first route 301 comprises the links or road sections a1, a2 and a3, and the nodes N1 and N2, the second route 302 comprises the links or road sections b1, b2 and b3 and the nodes N3 and N4, and the third route 303 comprises the links or road sections c1, c2 and c3 and the nodes N5 and N6. The case is now considered in which the situation information that winter conditions are prevailing was obtained, e.g. by user entry or from a weather sensor. When the vehicle navigation system now determines a route from starting point A to arrival point B, it will take numerical values assigned to the road sections that relate to the trafficability of the road sections in winter into account. The system may achieve that by calculating a cost function for each route based on these numerical values. The numerical values may for example be in the form of cost factors, wherein a higher cost factor means that the road is less trafficable in winter conditions. The vehicle navigation system aims at providing a user with a route that is safe to travel on, and accordingly it will select the route with the lowest cost function in this case. In the example of Fig. 3, the road sections a1 and a3 of route 301 are of moderate incline, whereas the road section a2 is very steep and has thus a high incline. Road sections b1 and b3 of the second route 302 have a moderate incline and are fairly straight. In contrast, section b2 comprises many curves with small curve radii. The road sections c1, c2 and c3 of the third route 303 do not comprise curves with small curve radii, and the road sections are flat, i.e. have a low incline. Yet the third route 303 has a greater length than the second route 302 or the first route 301, meaning that a car has to travel a longer distance from starting point A to arrival point B along the third route as compared to the first or second route. If the vehicle navigation system is now set to winter mode, it will calculate the cost function for each route taking into account the incline and the curve radii of road sections. Due to the steep road section a2 of the first route, the cost function of the first route may take on a rather high value. A similar high value may be obtained for the cost function of the second route, as the second route comprises the curvy road section b2 with very small curve radii. As the length of the route will also be taken into account, the third route will yield a moderately high value for the cost function, since it is the longest route. Yet the value of the cost function of the third route is still lower than the values of the cost functions of the first and second route, since the third route does not comprise road sections with high inclines or small curve radii. As a result, the vehicle navigation system would choose the third route 303 and display the route to the user. The driver of the vehicle may now start to navigate along the third route in order to reach arrival point B. Alternatively, all three routes may be displayed to the user together with information relating to the trafficability of the route and on the route length or required travel time. The user may then select the route which he considers most suitable. In another mode of the vehicle navigation system, the numerical values relating to the trafficability of road sections in winter may not be taken into account, and the system may provide the shortest route, e.g. the second route 302, to the user. In yet another mode, e.g. rain or flood mode, numerical values relating to the trafficability of road sections during rain or flooding are taken into account.

The road sections or links do not necessarily have to be straight lines connecting two nodes, they may be in the form of a general curve that can be described by intermediate points. These intermediate points are generally called shape points and are described by their geographical coordinates. The shape points describe the shape of a link or road section. The description of map data with the help of nodes, links, shape points and attributes is known to a person skilled in the art and will not be discussed in more detail.

Table 1 shows one possibility in many of assigning numerical values to road sections and calculating a cost function for a road section. In this example numerical values for the attributes "incline", "curve radius", "distance", and "hillside" are assigned to road sections. A numerical value for incline assigned to a road section may for example be in the range of 1 to 10, with 1 corresponding to a low incline, and 10 to a very high incline. For the road section property "curve radius" a value of 10 may correspond to very small curve radii, whereas a value of 1 may correspond to an almost straight road section. The value for distance may be the normalized length of the road section, wherein normalization may occur in such a way that the distance is appropriately considered in the cost function. Furthermore, the local condition "hillside" may take on a value of 1 for a road section leading along a southern side of a hill which is exposed to sun during most of the day, whereas a value of 10 may be assigned to a road section on a northern side of a hill, which is always in the shade. For two road sections table 1 comprises numerical values assigned to the attributes of each road section. Section 1 is a steep road section with tight curves, yet relatively short and on the southern side of a hill. Accordingly, the attributes incline and curve radius have high numerical values, whereas the attributes distance and hillside are assigned low numerical values. These numerical values may for example be provided by a data providing unit 102. To each of the attributes, a weighting factor is furthermore assigned. The weighting factor may be determined by the situation information and in this example takes on values inbetween 0 and 1. With such a weighting factor, the importance of each attribute can be determined. When a route suitable for driving in winter is to be determined, as in this example, high weighting factors are assigned to the attributes relating to the trafficability of road sections in winter, such as "incline" and "curve radius". When a situation of heavy rain or flooding has been determined, attributes such as altitude, known flood area or the proximity to a lake or a river, which may be provided with the map data, will be weighted with high weighting factors, whereas other attributes, such as hillside and incline, may only be weighted with low weighting factors. The situation information may thus determine which attributes are taken into account and how important the particular attribute is. Thus, it may set a weighting factor to 0 for a particular attribute in order to prevent the attribute from being used in route calculation. The weighting factors may additionaly be directly entered by a user according to his preferences, or they may be determined on the basis of automatically obtained situation information on current weather conditions. If a temperature sensor on a vehicle determines a drop in temperature resulting in a high probability of black ice formation, the weighting factors for incline and curve radius may for example be increased, and a new route calculated avoiding high inclines and small curve radii. From the numerical value and the weighting factor a weighted numerical value is then calculated, which is shown in the right column of table 1 for each section. A value of a cost function may then be calculated for each section for example by simply adding up the weighted numerical values. Such a calculation can be performed in a processing unit, such as processing unit 103.

**Table 1**

| Section 1 | | | | Section 2 | | | |
|---|---|---|---|---|---|---|---|
| | Numerical value | Weighting factor | Weighted numerical value | | Numerical value | Weighting factor | Weighted numerical value |
| incline | 7 | 0.8 | 5.6 | incline | 2 | 0.8 | 1.6 |
| curve radius | 7 | 0.6 | 4.2 | curve radius | 5 | 0.6 | 3 |
| distance | 2 | 0.6 | 1.2 | distance | 5 | 0.6 | 3 |
| hill-side | 1 | 0.3 | 0.3 | hill-side | 7 | 0.3 | 2.1 |
| sum | | | 11.3 | sum | | | 9.7 |

Section 2 is a rather flat road section with a moderate curve radius and of moderate length, yet it is located on the northern side of a hill. According to these properties, numerical values were assigned to the road section. Applying the same weighting factors as to section 1, weighted numerical values and a cost function can be calculated for section 2. In the present case, the value of the cost function for section 1 is 11.3, whereas for section 2 it is 9.7. As a result, a vehicle navigation system would determine that it is preferential to travel on section 2 as compared to section 1. A route generally comprises a plurality of road sections, and an overall cost function is thus calculated for a route. There are several ways to calculate a cost function, and the way most suitable for the present application is chosen. It should be understood that this is only an example, and that any numerical values may be assigned to the road sections that are able to describe the trafficability of the road section. Similarly, weighting factors may or may not be used, and a cost function may be calculated for each section or may only be calculated for the entire route using any function known to a person skilled in the art. The numerical values may also be directly used in the search algorithm when searching a route from the starting point to the arrival point, or the search algorithm may search for the e.g. five shortest routes and afterwards a cost function is determined for each route, and the route with the lowest cost function is selected. For such an application, a user may determine an additional distance which he is willing to travel in order to avoid unsafe routes.

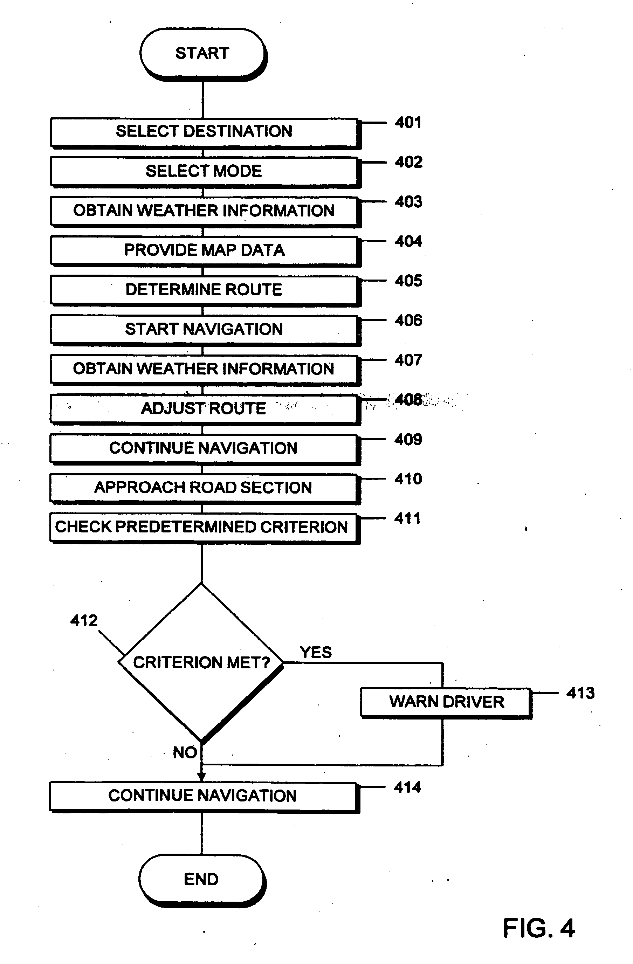

Fig. 4 shows a flow diagram of another embodiment of a method of providing a route in a vehicle navigation system. In a first step 401, the driver of the vehicle selects a destination by entering the destination with the input unit 101. In the next step 402, the driver selects the winter mode, in which numerical values relating to the trafficability of road sections in winter are taken into account for route determination. In the next step 403, weather information is obtained. In this example the weather information is obtained from a weather sensor mounted to the vehicle and comprising a thermometer, yet it may also be obtained from other information sources such as a radio channel, user entry or a wireless network connection, which can provide weather information over the internet or mobile phone services. The rain sensor may show that there is no rainfall at present, and the thermometer may determine that the outside temperature is above 0 degrees. In the next step 404, the data providing unit 102 provides map data to the processing unit 103. In step 405, the processing unit 103 determines a route based on the attributes relating to the trafficability of the road sections in winter provided with the map data, and based on other attributes, such as distance and driving time. The determined route is then displayed to the driver and navigation started in step 406. While the driver steers the vehicle along the determined route, the position determination unit 104 tracks the position of the vehicle, and the weather sensor 105 constantly monitors the weather conditions. The vehicle navigation system may thus constantly obtain weather information in step 407. In the present example, the temperature now falls below 0°C and rain/snowfall sets in. This is determined by the thermometer and the rain sensor and the information is submitted to the vehicle navigation system. The vehicle navigation system may now determine that it is very unsafe in the present weather conditions to travel on road sections which have a high incline or small curve radii. The vehicle navigation system may thus determine a new route for which the attributes "incline" and "curve radius" are of a higher importance. This may for example be achieved by calculating a cost function with higher weighting factors assigned to these attributes. The situation information, here low temperature and rain/snowfall, thus determines the consideration of attributes for route calculation. On the basis of this new cost function, a new route can then be determined from the present position to the destination, avoiding high inclines and small curve radii. The new route is then displayed to the driver, and navigation can continue along the new route in step 409. Even though the numerical values relating to the trafficability of road sections in winter are taken into account when determining a route, it cannot be avoided that the route comprises a road section which may be dangerous to travel on in winter conditions. When a road section is approached in step 410, the vehicle navigation system may thus check a predetermined criterion in step 411. Whether a particular road section is approached can be determined by means of the position determination unit 104. A predetermined criterion may be that a numerical value assigned to an attribute of the road section passes a certain threshold value, or a combination of numerical values pass a certain threshold value. If, as previously mentioned, numerical values from 1 to 10 are assigned to the attribute "incline", wherein a value of 10 indicates a very steep road section, then the predetermined criterion may be whether the numerical value of the attribute "incline" is larger than 8. It may be checked for each of the numerical values relating to the trafficability of road sections in winter whether a threshold value set for the respective numerical value is passed, or whether combinations of the numerical values pass predetermined threshold values. In the branching point 412, the next step of the method depends on whether the criterion is met or not. If the criterion is met, e.g. the approaching road section has a numerical value larger than 8 assigned to the attribute "incline", then the driver is warned in step 413. Such a warning may be a visual warning displayed on a display, or an audible warning put out through a speaker system, or a combination of both. With such a warning, the driver of the vehicle knows that a dangerous road section is approaching, and he can slow down the vehicle well in advance, thus avoiding accidents. In the case of a steep slope or high incline he may also decide to stop and to mount snow chains to the wheels of his vehicle. After the driver has been warned, navigation continues in step 414. If the criterion is not met at branching point 412, navigation is directly continued in step 414, which is the last step of the method. Steps 407 and 411, i.e. obtaining weather information and checking the predetermined criterion, respectively, may be repeatedly performed while navigating from the starting point to the arrival point. The driver of the vehicle is thus always provided with a route that is safe and suitable for driving in the presently prevailing conditions, and the driver is also warned if dangerous road sections are approached.

It should be clear that even though the above embodiments were mainly described with respect to winter conditions, equivalent embodiments considering other conditions, e.g. rain or flooding, are comprised within the scope of this invention. In the embodiment of Fig. 4, a flood mode may for example be selected, as a result of which road section properties, such as proximity to the sea, altitude of the road section and knowledge about whether this road section is within a flood area are taken into account when determining a route. Instead of obtaining weather information, e.g. in step 403 or step 407, tide information or information about a water level may be obtained. Similarly, heavy rainfall may be detected in step 403 or step 407, as a result of which a route may be determined avoiding road sections that lie close to a river, or that lie within a depression.

Additionally, it may be checked whether local road closures exist. Such road closures may for example exist in winter on mountain passes which are closed due to snow cover, which makes such mountain passes unpassable. Information on road closures may be obtained by the vehicle navigation system through a traffic message channel or through a wireless connection, e.g. via the internet or other data providing services. In route calculation, the road closure may then be considered by assigning a numerical value to the road section comprising the road closure, wherein the numerical value is chosen in such a way that routes comprising this road section will not be considered by the vehicle navigation system. Routes over mountain passes are generally shorter than routes leading to the same arrival point and avoiding the mountain pass, yet routes over mountain passes are generally more dangerous, particularly in winter. A vehicle is exposed to unnecessary danger if it is guided towards a mountain pass which is closed, as a result of which the vehicle has to turn around and retrace its route. Such situations can be avoided when taking road closures into account when determining a route.

As can be seen from the described embodiments of the invention, a method is provided which provides a user of the vehicle navigation system with a route which is safe and suitable to travel on in the prevailing conditions. That is achieved by obtaining situation information and taking into account road section properties that are of importance when traveling on the road section in the determined situation. Taking into account local conditions of the road sections further improves route determination. By determining the season by means of a calendar or the prevailing weather conditions by means of a weather sensor, the vehicle navigation system can automatically select the proper mode for route determination, e.g. the winter mode. The route is furthermore updated when weather conditions change, and the driver is warned of dangerous situations. Thus, the driver is provided with a safe route and accidents can be avoided.

## Claims

1. Method of providing a route in a vehicle navigation system (100), comprising the steps of
- providing a starting point (A) and a destination (B),
- providing map data comprising road sections (a1-a3; b1-b3) associated with numerical values relating to the trafficability of the road sections (a1-a3; b1-b3),
- obtaining situation information, and
- calculating a route (301, 302) from the starting point (A) to the destination (B) based on the map data comprising the road sections (a1-a3; b1-b3),
wherein the situation information determines the consideration of the numerical values associated with the road sections (a1-a3; b1-b3) for the route calculation, **characterized in that** the numerical values relate to the trafficability of the road sections (a1-a3; b1-b3) in winter and comprise numerical values relating to one or a combination of the following road section properties: incline, curvature, size.

2. Method according to claim 1, **characterized in that** the numerical values further relate to the trafficability of road sections (a1-a3; b1-b3) in one or a combination of the following situations: rainfall, flooding.

3. Method according to claim 2, **characterized in that** the numerical values relating to the trafficability of road sections (a1-a3; b1-b3) during rainfall or flooding comprise numerical values relating to one or a combination of the following road section properties: known flood area, altitude, proximity to sea, proximity to lake, proximity to river, drainage.

4. Method according to any of the preceding claims, **characterized in that** the situation information comprises one or a combination of the following: weather conditions, calendar information, snow coverage.

5. Method according to any of the preceding claims, **characterized in that** the determining of a route (301, 302) is performed so that road sections (a1-a3; b1-b3) with a higher incline and/or a smaller size and/or a smaller curve radius are avoided.

6. Method according to claim 5, **characterized in that** situation information relating to weather conditions is obtained before the route (301; 302) is determined and/or during navigation along the route (301; 302) in order to adjust the route (301, 302) based on the obtained situation information on weather conditions.

7. Method according to any of the preceding claims, **characterized in that** the numerical values relating to the trafficability of the road sections (a1-a3; b1-b3) in winter comprise numerical values relating to one or a combination of the following local conditions: roadside vegetation, probability of black ice formation, hillside situation, road crests, road dips, road closures, mountain passes, altitude.

8. Method according to any of the preceding claims, **characterized in that** the map data comprising road sections (a1-a3; b1-b3) to which numerical values are assigned is provided on a data carrier which can be accessed by the navigation system.

9. Method according to any of the preceding claims, **characterized in that** the numerical values relating to the trafficability of the road sections (a1-a3; b1-b3) comprise numerical values that are assigned to road sections (a1-a3; b1-b3) by a user of the vehicle navigation system (100).

10. Method according to any of the preceding claims, **characterized in that** weighting factors weighting the numerical values relating to the trafficability of the road sections (a1-a3; b1-b3) are determined based on the situation information and are taken into account for the route determination.

11. Method according to any of the preceding claims, **characterized by** further comprising the step of automatically obtaining situation information.

12. Method according to any of the preceding claims, **characterized by** further comprising the step of providing situation information by user input.

13. Method according to any of the preceding claims, **characterized by** further comprising the step of warning a driver of a vehicle if the vehicle approaches a road section (a1-a3; b1-b3) to which numerical values relating to the trafficability of the road section (a1-a3; b1-b3) are assigned which meet a predetermined criterion.

14. Vehicle navigation system, in which a route is provided along which a driver of a vehicle can navigate from a starting point to a destination, comprising
- an input unit (101) for entering the destination and/or the starting point,
- a data providing unit (102) providing map data comprising road sections associated with numerical values relating to the trafficability of the road sections,
- an information providing unit (101, 105) providing situation information,
- a processing unit (103) for calculating a route from the starting point to the destination based on the map data comprising the road sections,
wherein the situation information determines the consideration of the numerical values associated with the road sections for the route calculation, **characterized in that** the numerical values relate to the trafficability of the road sections in winter and comprise numerical values relating to one or a combination of the following road section properties: incline, curvature and size.

15. Vehicle navigation system according to claim 14, **characterized by** further comprising control means (101) which enable a user of the vehicle navigation system (100) to enter situation information.

16. Vehicle navigation system according to claim 14 or 15, **characterized by** further comprising a weather sensor (105) for determining situation information in the form of weather conditions.

17. Vehicle navigation system according to any of claims 14 to 16, **characterized in that** the vehicle navigation system (100) is formed so as to perform any of the methods of claims 1-13.

18. Computer program product that can be loaded into the internal memory of a computer, said product comprising software code portions for performing any of the methods of claims 1-13 when the product is executed.

19. Data carrier for the use with a vehicle navigation system of any of claims 14 to 17, comprising map data with road sections, to which numerical values relating to the trafficability of the road sections are assigned.

## Patentansprüche

1. Verfahren zum Bereitstellen einer Route in einem Fahrzeugnavigationssystem (100), die Schritte umfassend:
- Bereitstellen eines Startpunktes (A) und eines Ziels (B),
- Bereitstellen von Kartendaten, welche Straßenabschnitte (a1-a3; b1-b3) umfassen, welchen numerische Werte zugeordnet sind, die sich auf die Befahrbarkeit der Straßenabschnitte (a1-a3; b1-b3) beziehen,
- Erhalten von Situationsinformation und
- Berechnen einer Route (301, 302) von dem Startpunkt (A) zu dem Ziel (B) basierend auf den Kartendaten, welche die Straßenabschnitte (a1-a3; b1-b3) umfassen,
wobei die Situationsinformation die Berücksichtigung der den Straßenabschnitten (a1-a3; b1-b3) zugeordneten numerischen Werte für die Routenberechnung bestimmt, **dadurch gekennzeichnet, dass** die numerischen Werte sich auf die Befahrbarkeit der Straßenabschnitte (a1-a3; b1-b3) im Winter beziehen und numerische Werte umfassen, welche sich auf eine oder eine Kombination der folgenden Straßenabschnittseigenschaften beziehen: Steigung, Biegung, Größe.

2. Verfahren nach Anspruch 1, **dadurch gekennzeichnet, dass** die numerischen Werte sich weiterhin auf die Befahrbarkeit von Straßenabschnitten (a1-a3; b1-b3) in einer oder einer Kombination der folgenden Situationen beziehen: Niederschlag, Überschwemmung.

3. Verfahren nach Anspruch 2, **dadurch gekennzeichnet, dass** sich die auf die Befahrbarkeit von Straßenabschnitten (a1-a3; b1-b3) während Niederschlag oder Überschwemmung beziehenden numerischen Werte numerische Werte umfassen, welche sich auf eine oder eine Kombination der folgenden Straßenabschnittseigenschaften beziehen: bekanntes Überflutungsgebiet, Höhe, Nähe zu Meer, Nähe zu See, Nähe zu Fluss, Drainage.

4. Verfahren nach einem der voranstehenden Ansprüche, **dadurch gekennzeichnet, dass** die Situationsinformation eines oder eine Kombination der folgenden Elemente umfasst: Wetterbedingungen, Kalenderinformation, Schneeberichterstattung.

5. Verfahren nach einem der voranstehenden Ansprüche, **dadurch gekennzeichnet, dass** das Bestimmen einer Route (301, 302) derart durchgeführt wird, dass Straßenabschnitte (a1-a3; b1-b3) mit einer größeren Steigung und/oder einer geringeren Größe und/oder einem geringerem Kurvenradius vermieden werden.

6. Verfahren nach Anspruch 5, **dadurch gekennzeichnet, dass** sich auf Wetterbedingungen beziehende Situationsinformation, bevor die Route (301; 302) bestimmt wird und/oder während der Navigation entlang der Route (301; 302) erhalten wird, um die Route (301, 302) basierend auf der erhaltenen Situationsinformation über Wetterbedingungen anzupassen.

7. Verfahren nach einem der voranstehenden Ansprüche, **dadurch gekennzeichnet, dass** die numerischen Werte, die sich auf die Befahrbarkeit der Straßenabschnitte (a1-a3; b1-b3) im Winter beziehen, numerische Werte umfassen, welche sich auf eine oder eine Kombination der folgenden örtlichen Bedingungen beziehen: Straßenrandbewuchs, Wahrscheinlichkeit von Glatteisbildung, Hanglagensituation, Straßenkuppen, Straßensenken, Straßensperrungen, Bergpässe, Höhe.

8. Verfahren nach einem der voranstehenden Ansprüche, **dadurch gekennzeichnet, dass** die Kartendaten, welche Straßenabschnitte (a1-a3; b1-b3) umfassen, denen numerische Werte zugewiesen sind, auf einem Datenträger bereitgestellt werden, auf welchen das Navigationssystem zugreifen kann.

9. Verfahren nach einem der voranstehenden Ansprüche, **dadurch gekennzeichnet, dass** die numerischen Werte, welche sich auf die Befahrbarkeit der Straßenabschnitte (a1-a3; b1-b3) beziehen, numerische Werte umfassen, welche durch einen Benutzer des *Fahrzeugnavigationssystems (100) Straßenabschnitten (a1-a3; b1-b3) zugewiesen werden.

10. Verfahren nach einem der voranstehenden Ansprüche, **dadurch gekennzeichnet, dass** Wichtungsfaktoren, welche die sich auf die Befahrbarkeit der Straßenabschnitte (a1-a3; b1-b3) beziehenden numerischen Werte wichten, basierend auf der Situationsinformation bestimmt werden und für die Routenbestimmung berücksichtigt werden.

11. Verfahren nach einem der voranstehenden Ansprüche, **dadurch gekennzeichnet, dass** es weiterhin den Schritt des automatischen Erhaltens von Situationsinformation umfasst.

12. Verfahren nach einem der voranstehenden Ansprüche, **dadurch gekennzeichnet, dass** es weiterhin den Schritt des Bereitstellens von Situationsinformation durch Benutzereingabe umfasst.

13. Verfahren nach einem der voranstehenden Ansprüche, **dadurch gekennzeichnet, dass** es weiterhin den Schritt des Warnens eines Fahrers eines Fahrzeugs umfasst, wenn sich das Fahrzeug einem Straßenabschnitt (a1-a3; b1-b3) nähert, zu welchen sich auf die Befahrbarkeit des Straßenabschnitts (a1-a3; b1-b3) beziehende numerische Werte zugewiesen sind, welche ein vorbestimmtes Kriterium erfüllen.

14. Fahrzeugnavigationssystem, in welchem eine Route bereitgestellt wird, entlang derer ein Fahrer eines Fahrzeugs von einem Startpunkt zu einem Ziel navigieren kann, umfassend:
- eine Eingabeeinheit (101) zum Eintragen des Ziels und/oder des Startpunktes,
- eine Datenbereitstellungseinheit (102), welche Kartendaten bereitstellt, die Straßenabschnitte umfassen, welchen numerische Werte, die sich auf die Befahrbarkeit der Straßenabschnitte beziehen, zugeordnet sind,
- eine Informationsbereitstellungseinheit (101, 105) zum Bereitstellen von Situationsinformation,
- eine Prozessoreinheit (103) zum Berechnen einer Route von dem Startpunkt zu dem Ziel basierend auf den Kartendaten, welche die Straßenabschnitte umfassen,
wobei die Situationsinformation die Berücksichtigung der den Straßenabschnitten zugeordneten numerischen Werten für die Routenberechnung bestimmt, **dadurch gekennzeichnet, dass** sich die numerischen Werte auf die Befahrbarkeit der Straßenabschnitte im Winter beziehen und numerische Werte umfassen, welche sich auf eine oder eine Kombination der folgenden Straßenabschnittseigenschaften beziehen: Steigung, Biegung und Größe.

15. Fahrzeugnavigationssystem nach Anspruch 14, **dadurch gekennzeichnet, dass** es weiterhin ein Kontrollmittel (101) umfasst, welches einen Benutzer des Fahrzeugnavigationssystems (100) Situationsinformation eintragen lässt.

16. Fahrzeugnavigationssystem nach Anspruch 14 oder 15, **dadurch gekennzeichnet, dass** es weiterhin einen Wettersensor (105) zum Bestimmen von Situationsinformation in der Form von Wetterbedingungen umfasst.

17. Fahrzeugnavigationssystem nach einem der Ansprüche 14-16, **dadurch gekennzeichnet, dass** das Fahrzeugnavigationssystem (100) ausgebildet ist, eines der Verfahren der Ansprüche 1-13 durchzuführen.

18. Computerprogrammprodukt, welches in den internen Speicher eines Computers geladen werden kann, wobei das Produkt Softwarecodeabschnitte zum Durchführen eines der Verfahren der Ansprüche 1-13 umfasst, wenn das Produkt ausgeführt wird.

19. Datenträger zur Verwendung mit einem Fahrzeugnavigationssystem nach einem der Ansprüche 14-17, Kartendaten mit Straßenabschnitten umfassend, welchen numerische Werte zugewiesen sind, die sich auf die Befahrbarkeit der Straßenabschnitte beziehen.

## Revendications

1. Procédé de fourniture d'un itinéraire dans un système de navigation de véhicule (100), comprenant les étapes de
- fournir un point de départ (A) et un lieu de destination (B),
- fournir des données de carte routière comprenant des sections de route (a1-a3; b1-b3) associées à des valeurs numériques se référant à la praticabilité des sections de route (a1-a3; b1-b3),
- obtenir une information sur la situation, et
- calculer un itinéraire (301, 302) du point de départ (A) vers le lieu de destination (B) à base des données de carte routière comprenant les sections de route (a1-a3; b1-b3),
dans lequel l'information sur la situation détermine la prise en compte des valeurs numériques associées aux sections de route (a1-a3; b1-b3) pour le calcul d'itinéraire, **caractérisé en ce que** les valeurs numériques se réfèrent à la praticabilité des sections de route (a1-a3; b1-b3) en hiver et comprennent des valeurs numériques se référant à l'une ou une combinaison des caractéristiques de section de route suivantes: pente, courbure, dimension.

2. Procédé selon la revendication 1, **caractérisé en ce** les valeurs numériques se réfèrent en outre à la praticabilité de sections de route (a1-a3; b1-b3) dans l'une ou une combinaison des situations suivantes: pluie, inondation.

3. Procédé selon la revendication 2, **caractérisé en ce que** les valeurs numériques se référant à la praticabilité de sections de route (a1-a3; b1-b3) lors d'une pluie ou d'une inondation comprennent des valeurs numériques se référant à l'une ou une combinaison des caractéristiques de section de route suivantes: région d'inondation connue, altitude, proximité de la mer, proximité d'un lac, proximité d'une rivière, drainage.

4. Procédé selon l'une quelconque des revendications précédentes, **caractérisé en ce que** l'information sur la situation comprend l'une ou une combinaison des informations suivantes: conditions météorologiques, information calendaire, couche de neige.

5. Procédé selon l'une quelconque des revendications précédentes, **caractérisé en ce que** la détermination d'un itinéraire (301, 302) est effectuée de telle manière que des sections de route (a1-a3; b1-b3) ayant une pente plus importante et/ou une dimension plus petite et/ou un rayon de courbure plus petit sont évitées.

6. Procédé selon revendication 5, **caractérisé en ce que** l'information sur la situation se référant à des conditions météorologiques est obtenue avant la détermination de l'itinéraire (301; 302) et/ou au cours de la navigation le long de l'itinéraire (301; 302) pour ajuster l'itinéraire (301, 302) à base de l'information obtenue sur la situation des conditions météorologiques.

7. Procédé selon l'une quelconque des revendications précédentes, **caractérisé en ce que** les valeurs numériques se référant à la praticabilité des sections de route (a1-a3; b1-b3) en hiver comprennent des valeurs numériques se référant à l'une ou une combinaison des conditions locales suivantes: végétation en bord de route, probabilité de formation de verglas, situation de versant, sommets de côte, creux de côte, fermetures de route, routes de col, altitude.

8. Procédé selon l'une quelconque des revendications précédentes, **caractérisé en ce que** les données de carte routière comprenant des sections de route (a1-a3; b1-b3) auxquelles des valeurs numériques sont attribuées sont fournies sur un support de données accessible pour le système de navigation.

9. Procédé selon l'une quelconque des revendications précédentes, **caractérisé en ce que** les valeurs numériques se référant à la praticabilité des sections de route (a1-a3; b1-b3) comprennent des valeurs numériques qui sont attribuées à des sections de route (a1-a3; b1-b3) par un utilisateur du système de navigation de véhicule (100).

10. Procédé selon l'une quelconque des revendications précédentes, **caractérisé en ce que** des facteurs de pondération pondérant les valeurs numériques se référant à la praticabilité des sections de route (a1-a3; b1-b3) sont déterminés à base de l'information sur la situation et sont pris en compte pour la détermination d'itinéraire.

11. Procédé selon l'une quelconque des revendications précédentes, **caractérisé en ce qu'**il comprend en outre l'étape d'obtenir automatiquement une information sur la situation.

12. Procédé selon l'une quelconque des revendications précédentes, **caractérisé en ce qu'**il comprend en outre l'étape de fournir une information sur la situation par saisie utilisateur.

13. Procédé selon l'une quelconque des revendications précédentes, **caractérisé en ce qu'**il comprend en outre l'étape d'avertir un conducteur d'un véhicule si le véhicule s'approche d'une section de route (a1-a3; b1-b3) à laquelle sont attribuées des valeurs numériques se référant à la praticabilité de la section de route (a1-a3; b1-b3) qui correspondent à un critère prédéterminé.

14. Système de navigation de véhicule, dans lequel on fournit un itinéraire le long duquel un conducteur d'un véhicule peut naviguer à partir d'un point de départ vers un lieu de destination, comprenant
- une unité d'entrée (101) pour entrer le lieu de destination et/ou le point de départ,
- une unité de fourniture de données (102) fournissant des données de carte routière comprenant des sections de route associées à des valeurs numériques se référant à la praticabilité de la sections de route,
- une unité de fourniture d'information (101, 105) fournissant une information sur la situation,
- une unité de traitement (103) pour calculer un itinéraire à partir du point de départ vers le lieu de destination à base des données de carte routière comprenant les sections de route,
dans lequel l'information sur la situation détermine la prise en compte des valeurs numériques associées aux sections de route pour le calcul d'itinéraire, **caractérisé en ce que** les valeurs numériques se réfèrent à la praticabilité des sections de route en hiver et comprennent des valeurs numériques se référant à l'une ou une combinaison des caractéristiques de section de route suivantes: pente, courbure et dimension.

15. Système de navigation de véhicule selon la revendication 14, **caractérisé en ce qu'**il comprend en outre des moyens de commande (101) permettant à un utilisateur du système de navigation de véhicule (100) de saisir une information sur la situation.

16. Système de navigation de véhicule selon la revendication 14 ou 15, **caractérisé en ce qu'**il comprend en outre un capteur météo (105) pour déterminer une information sur la situation sous forme de conditions météorologiques.

17. Système de navigation de véhicule selon l'une quelconque des revendications 14 à 16, **caractérisé en ce que** le système de navigation de véhicule (100) est formé pour mettre en oeuvre l'un quelconque des procédés des revendications 1-13.

18. Produit de programme d'ordinateur pouvant être chargé dans la mémoire interne d'un ordinateur, ledit produit comprenant des portions de code logiciel pour exécuter l'un quelconque des procédés des revendications 1-13 lorsque le produit est exécuté.

19. Support de données pour utilisation avec un système de navigation de véhicule selon l'une quelconque des revendications 14 à 17, comprenant des données de carte routière avec des sections de route, auxquelles des valeurs numériques se référant à la praticabilité des sections de route sont attribuées.
